# EUROPÄISCHE PATENTSCHRIFT

(11) **EP 0 991 590 B1**
(45) Veröffentlichungstag und Bekanntmachung des Hinweises auf die Patenterteilung: **14.05.2003**
(21) Anmeldenummer: 98934923.8
(22) Anmeldetag: 05.06.1998
(51) Int. Cl.: C01B 31/02, B01J 19/08

(54) **VERFAHREN UND VORRICHTUNG ZUR HERSTELLUNG VON FULLERENEN**
METHOD AND DEVICE FOR PRODUCING FULLERENES
PROCEDE ET DISPOSITIF POUR LA FABRICATION DE FULLERENES

(30) Priorität: 06.06.1997 FR 9707011
(43) Veröffentlichungstag der Anmeldung: 12.04.2000
(73) Patentinhaber: SCHWOB, Yvan, F-06400 Cannes (FR)
(72) Erfinder: SCHWOB, Yvan, F-06400 Cannes (FR)
(74) Vertreter: Geissler, Bernhard, Dr.jur., Dipl.-Phys.
(86) Internationale Anmeldenummer: EP9803399
(87) Internationale Veröffentlichungsnummer: WO98055396

(56) Entgegenhaltungen:
- EP-A- 0 527 035
- WO-A-86/02024
- WO-A-94/04461
- WO-A-94/17908
- DE-A- 4 243 566
- DE-A- 4 302 144

## Beschreibung

Die Erfindung beinhaltet eine Vorrichtung und ein Verfahren zur kontinuierlichen Herstellung von Russen mit hohem Anteil an Fullerenen.

Unter Fullerenen werden im nachfolgenden molekulare, chemisch einheitliche und stabile Fullerene verstanden. Als Vertreter dieser Gruppe Fullerene seien Fulleren C₆₀, C₇₀ oder C₈₄ genannt. Diese Fullerene sind in der Regel löslich in aromatischen Lösungsmitteln. Besonders bevorzugtes Fulleren ist das Fulleren C₆₀.

Zur Herstellung von fullerenhaltigen Russen sind zahlreiche Verfahren bekannt. Die bisher erreichbare Konzentration an Fulleren in den erhaltenen Russen sind allerdings bescheiden, so dass eine Reindarstellung von Fullerenen nur mit sehr grossem Aufwand möglich ist. Durch den damit verbunden sehr hohen Preis der reinen Fullerene sind interessante Anwendungen auf verschiedenen Gebieten der Technik aus ökonomischen Gründen von vornherein nicht denkbar.

Beispielsweise sei auf die US-A 5,227,038 hingewiesen, worin eine Laboratoriumsvorrichtung beschrieben ist, die es ermöglicht, durch Einwirkung eines Lichtbogens zwischen als Rohstoff dienenden Kohleelektroden auf diskontinuierliche Weise einige Gramm Fullerene herzustellen. Abgesehen davon, dass die produzierten Mengen winzig sind, ist die Konzentration an Fulleren C₆₀ in den abgeschiedenen Kohlenstoffrussen selbst sehr gering und überschreitet niemals 10% der Produktasse. Ausserdem liegt Fulleren C₆₀ bei diesem Verfahren als Gemisch mit höheren Fullerenverbindungen vor, was zur Isolierung in genügender Reinheit kostspielige Fraktionierungen erfordert.

In der US-A 5,304,366 ist ein Verfahren beschrieben, das eine gewisse Konzentrierung des Produktes zulässt, aber ein System zum Filtrieren des Gaskreislaufes bei hoher Temperatur benutzt, was in der Praxis schwierig durchzuführen ist

In DE 42 43 566 wird ein Verfahren zur Abtrennung von Fulleren aus einem heißen Fulleren-Rußgemisch beschrieben. Nach diesem Verfahren wird dem Fullerendampf-Ruß-Strom, der aus einem Lichtbogen austritt, ein Trägergas unter spezifischen Bedingungen zugemischt und dann über Filter geleitet. Der in dem Fulleren-Roßgemisch enthaltene Kohlenstoff wird dabei aus der Erosion der aus Graphit bestehenden Lichtbogenelektroden selbst gewonnen. Nachteilig an diesem Verfahren zur Gewinnung eines Fulleren-Rußgemisches ist es, daß zum einen der Kohlenstofffluß nicht regelbar ist, zum anderen daß der Kohlenstofffluß insgesamt sehr niedrig ist. Die Abtrennung von Ruß aus dem mit Fulleren beladenen Trägergasstrom kann auch mit Hilfe von Zyklonen erfolgen. Nachteilig an dem Trennverfahren nach DE 42 43 566 ist, dass insbesondere das Trägergas separat hinzugefügt werden muss. Darüber hinaus beschreibt diese Offenbarung zwar die Verwendung von Quarzrohrfiltern, offenbart jedoch nicht, welche Art von Zyklonen und insbesondere in welcher Anordnung welcher Zyklone eine adäquate Abtrennung erfolgen kann.

In der EP-B1 0 682 561 ist ein allgemeines Produktionsverfahren fiir Kohlenstoffrusse mit Nanostruktur beschrieben, welches durch die Einwirkung eines gasförmigen Plasmas auf Kohlenstoff bei hohen Temperaturen definiert ist. In einer der so erhaltenen Produktserien kann man bei ausreichenden Behandlungstemperaturen Fullerene auf kontinuierliche technische Weise erhalten.

Die gemäss dem Verfahren der EP-B1 0 682 561 austretenden Reaktionsprodukte sind indessen sehr unrein und enthalten wiederum bestenfalls 10 % Fulleren C₆₀ als Gemisch mit höheren Fullerenen neben nicht in Fullerene umgewandeltem Kohlenstoff.

Die Aufgabe der Erfindung bestand folglich darin, eine Vorrichtung und ein Verfahren zu entwickeln, das gestattet kontinuierlich Russe mit hohem Fullerenanteil herzustellen.

Die Aufgabe konnte gelöst werden mit der erfindungsgemässen Vorrichtung gemäss Patentanspruch 1 und dem darauf aufbauenden Verfahren nach Patentanspruch 12.

### Beschreibung der Figuren:

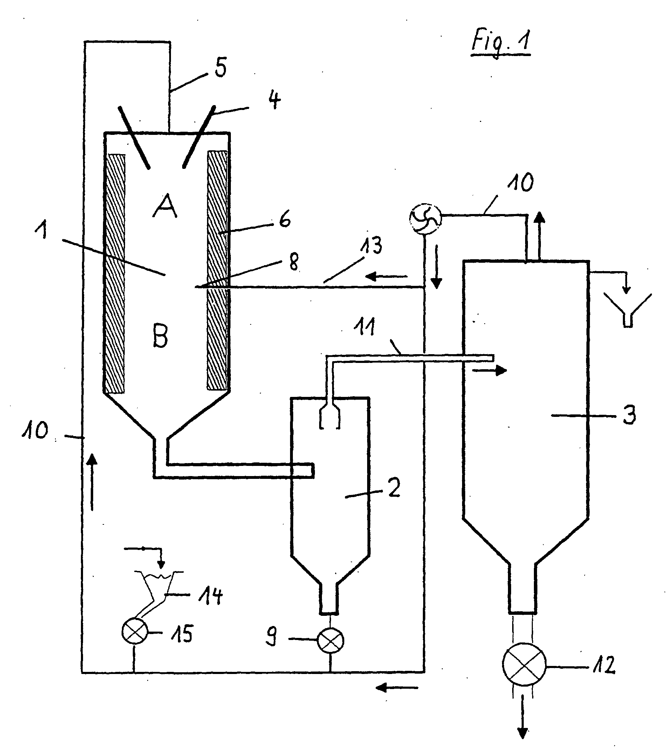

Fig. 1 zeigt eine Ausführungsform der erfindungsgemässen Vorrichtung, bestehend im wesentlichen aus Plasmareaktor (1) mit der ersten Reaktionskammer (A) und der zweiten Reaktionskammer (B), aus dem daran anschliessenden Warmabscheider (2) und dem daran anschliessenden Kaltabscheider (3).

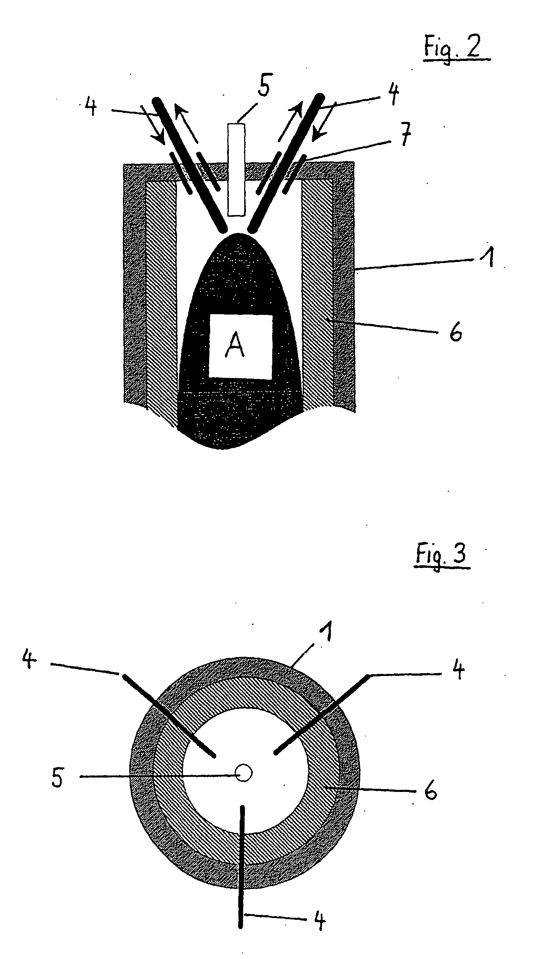

Fig. 2 zeigt einen Ausschnitt aus dem Kopfteil des Plasmareaktors (1), umfassend im wesentlichen die erste Reaktionskammer (A).

Fig. 3 zeigt die Sicht von oben auf den Plasmareaktor (1), darstellend eine Ausführungsform der Erfindung mit drei im Winkel von 120° verteilten Elektroden (4), einer zentralen Zufuhreinrichtung (5) für das kohlenstoffhaltige Material und der hitzebeständigen und wärmeisolierenden Auskleidung (6).

Fig. 4 zeigt eine weitere Ausführungsform der erfindungsgemässen Vorrichtung, die im wesentlichen aus denselben Bestandteilen wie Fig. 1 besteht, worin aber der Produktfluss im Plasmareaktor (1) entgegen der Schwerkraft verläuft.

Die erfindungsgemässe Vorrichtung besteht gemäss Patentanspruch 1 aus:
a) einem Plasmareaktor (1), der aus einer ersten Reaktionskammer (A) besteht, in welcher zwei oder mehrere Elektroden (4) eingelassen sind; die erste Reaktionskammer (A) ferner eine Zufuhreinrichtung (5) für das Plasmagas und die kohlenstoffhaltigen Verbindungen enthält, welche das Plasmagas und die kohlenstoffhaltigen Verbindungen zentral in die Reaktionszone leitet; der Plasmareaktor (1) eine der ersten Reaktionskammer (A) angrenzende, zweite Reaktionskammer (B) enthält, die über geeignete Einrichtungen zur Kühlung des aus der ersten Reaktionskammer (A) austretenden Reaktionsgemisches verfügt,
b) einer dem Plasmareaktor anschliessenden Warmabscheider (2) und
c) einem mit dem Warmabscheider verbundenen Kaltabscheider (3).

Der Plasmareaktor (1) besteht zweckmässig aus einem zylinderförmigen Metallmantel der gegebenenfalls doppelwandig ausgelegt werden kann. In dieser Doppelwandung kann ein geeignetes Kühlmittel zirkulieren. Der Metallmantel kann ausserdem eine, in der Regel aus Graphit oder zusätzlich aus einer Keramikschicht bestehende, Isolation (6) vorgesehen sein. Die erste Reaktionskammer (A) ist fiir die Plasmareaktion bei sehr hohen Temperaturen vorbehalten.

Im Kopfteil der ersten Reaktionskammer (A) sind erfindungsgemäss zwei oder mehrere, bevorzugt drei, Elektroden (4) eingelassen. Die Elektroden sind zweckmässig winklig zur Achse so angeordnet, dass sie im oberen Teil der ersten Reaktionskammer (A) einen Schnittpunkt bilden und über Stopfbüchsen (7) individuell in der Richtung ihrer Achsen stufenlos verstellbar sind. Die Neigung zur Senkrechtachse liegt zweckmässig im Bereich von 15° bis 90°, jedoch in allen Fällen so, dass eine leichte Zündung des das Plasma erzeugenden Lichtbogens ermöglicht wird und eine maximale Stabilität des Plasmas garantiert ist.

Von Vorteil sind die Elektroden (4) gleichmässig verteilt, entsprechend ergibt sich bei drei Elektroden ein Winkelabstand von 120°. Üblicherweise werden in der Fachwelt übliche Plasmaelektroden verwendet. Diese bestehen üblicherweise aus einem möglichst reinen Graphit in der Form von zylindrischen Stäben von in der Regel einigen Zentimetern Durchmesser. Gegebenenfalls enthält der Graphit weitere Elemente, die einen stabilisierenden Effekt auf das Plasma haben.

Die Elektroden werden in der Regel mit Wechselspannung zwischen 50 und 500 Volt betrieben. Die zugeführte Energie bewegt sich üblicherweise im Bereich von 40 kW/h bis 150 kW/h. Eine geeignete Steuerung der Elektroden sorgt fiir eine gleichmässige und stabile Plasmazone. Die Elektroden werden ihrem Abbrand entsprechend automatisch nachjustiert.

Die Zufuhreinrichtung (5) dient als Speisungsorgan sowohl für die kohlenstoffhaltigen Verbindungen als auch für das Plasmagas. Es kann dabei auf in der Fachwelt übliche Vorrichtungen zurückgegriffen werden, die eine gleichmässige Zufuhr ermöglichen. Die Zufuhr erfolgt zweckmässig zentral in die durch die Elektroden gesteuerte Plasmazone.

Die zweite Reaktionskammer (B) verfügt über geeignete Einrichtungen zur wirksamen und gezielten Kühlung des aus der ersten Reaktionskammer (A) austretenden Reaktionsgemischs. In einer vorzugsweisen Ausführungsform kann dafür eine Zufuhreinrichtung (8) vorgesehen sein, die z. B. durch Zyklonwirkung eine geeignete Verteilung von z. B. Plasmagas oder gegebenenfalls einem anderen Kühlmittel erlaubt.

Erfindungsgemäss wird das aus der zweiten Reaktionskammer (B) austretende Reaktionsgemisch dem Warmabscheider (2) zugeführt.

Der Warmabscheider (2) ist zweckmässig in Form eines isolierten oder isotherm beheizbaren Zyklons ausgestaltet, welcher im unteren Teil eine Schleuse (9) zur Abtrennung der nicht flüchtigen Bestandteile, eine Leitung (10) zur Rückführung der nicht flüchtigen Bestandteile in den Plasmareaktor (1) sowie im oberen Teil eine Leitung (11) zur Überführung der flüchtigen Bestandteile in den Kaltabscheider (3) enthält

Die isotherme Beheizung des Zyklons kann durch übliche Massnahmen erreicht werden.

Alternativ kann der Warmabscheider durch einen geeigneten hitzebeständigen Filter ersetzt werden. Ein solcher Filter kann z. B. aus hitzebeständigen Materialien wie aus poröser Keramik, einer Metallfritte oder einem Graphitschaum bestehen. Entsprechend dem Warmabscheider können nicht näher dargestellte Einrichtungen, die eine Rückführung der abgetrennten festen Bestandteile ermöglichen, sowie Leitungen, die eine Überführung der gasförmigen Bestandteile in den Kaltabscheider (3) gestatten, vorgesehen sein.

Dem Warmabscheider (2) ist ein Kaltabscheider (3) angeschlossen, welcher zweckmässig in Form eines kühlbaren Zyklons ausgestaltet ist und, welcher im unteren Teil eine Schleuse (12) zur Abtrennung der fullerenhaltigen Russe und im oberen Teil eine Leitung (10) zur Rückführung des Plasmagases in den Plasmareaktor (1) enthält.

Die Kühlung dieses Zyklons kann auf übliche Art und Weise z. B. über einen mit Kühlflüssigkeit gespiesenen Kühlmantel erfolgen.

In einer weiteren Ausgestaltung der erfindungsgemässen Vorrichtung kann eine Leitung (13) für die Speisung der Kühleinrichtung der zweiten Reaktionskammer (B) aus der Leitung (10) abgezweigt sein.

Auch kann eine Eintragungsvorrichtung (14) für das kohlenstoffhaltige Material vorliegen, die gestattet, das kohlenstoffhaltige Material über eine Schleuse (15) in die Leitung (10) einzuspeisen.

Gegenstand der Erfindung ist im weiteren ein Verfahren zur Herstellung von Russen mit hohem Anteil an den eingangs genannten Fullerenen aus kohlenstoffhaltigen Verbindungen im Plasma mit Hilfe der vorstehend dargestellten erfindungsgemässen Vorrichtung. Insbesondere betrifft die Erfindung ein Verfahren zur Herstellung von Russen mit hohem Anteil an Fulleren C₆₀.

Zweckmässig wird die Temperatur des Plasmas so eingestellt, dass eine grösstmögliche Verflüchtigung des eingetragenen kohlenstoffhaltigen Materials erreicht wird. In der Regel beträgt die Temperatur im ersten Reaktionsraum (A) im Minimum 4000 °C.

Als Plasmagas wird zweckmässig ein Edelgas oder ein Gemisch von verschiedenen Edelgasen verwendet. Bevorzugt wird Helium, gegebenenfalls im Gemisch mit einem anderen Edelgas verwendet. Die verwendeten Edelgase sollten so rein wie möglich sein.

Als kohlenstoffhaltiges Material wird von Vorteil ein hochreiner Kohlenstoff verwendet, der möglichst frei ist von störenden und die Qualität der Fullerene negativ beeinflussenden Verunreinigungen.

Verunreinigungen wie z. B. Wasserstoff, Sauerstoff oder Schwefel verringern die Produktionsausbeute an Fullerenen und bilden unerwünschte Nebenprodukte. Andererseits verursacht jede gasförmige im Kreislauf des Herstellungszyklus vorhandene Verunreinigung eine Verminderung der Reinheit des Plasmagases und erfordert Zufuhr des Plasmagases in reiner Form, um die ursprüngliche Zusammensetzung aufrechtzuerhalten.

Allerdings ist es auch möglich, das Plasmagas direkt, im Kreislauf des Herstellungszyklus, einer Reinigung zu unterziehen.

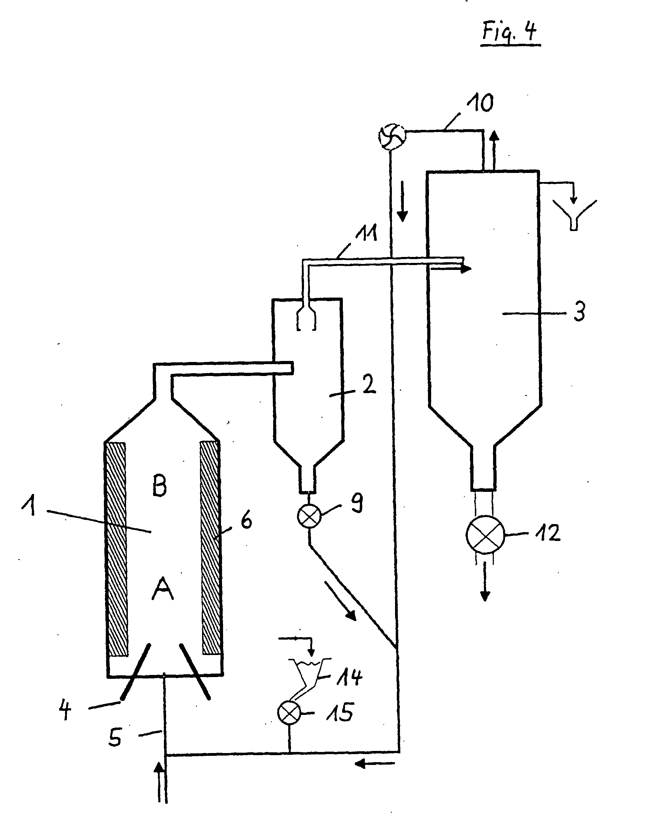

Zweckmässig gelangen hochreine feingemahlene Kohlenstoffpulver vom Typ Acetylenruss, Graphitpulver, Russe, gemahlene pyrolytische Graphite oder hochkalcinierte Kokse oder Gemische der genannten Kohlenstoffe zum Einsatz. Um eine optimale Verdampfung im Plasma zu erzielen, sind die genannten Kohlenstoffpulver bevorzugt möglichst fein. Gröbere Kohlenstoffteilchen können unter Umständen unverdampft die Plasmazone passieren. In diesem Fall kann eine Vorrichtung gemäss Figur 4, worin die Kohlenstoffteilchen der Schwerkraft entgegengesetzt in die Plasmazone gelangen, Abhilfe schaffen.

Das kohlenstoffhaltige Material wird zweckmässig zusammen mit dem Plasmagas über die Zufuhreinrichtung (5) in den Plasmareaktor gespiesen.

Das Plasmagas enthält das kohlenstoffhaltige Material zweckmässig in einer Menge von 0,1 kg/m³ bis 5 kg/m³.

Das in der ersten Reaktionskammer (A) gebildete Reaktionsgemisch wird wie oben bereits erwähnt in der zweiten Reaktionskammer (B) mit genügender Wirksamkeit gekühlt, um es für einen definierten Zeitraum von in der Regel Bruchteilen einer Sekunde bis zu einer Sekunde auf einer Temperatur von zweckmässig zwischen 1000 °C und 2700 °C zu halten. In dieser Phase rekombinieren sich die aus der ersten Reaktionskammer (A) austretenden gasförmigen Kohlenstoffmoleküle zu den eingangs genannten Fullerenen.

Die Kühlung erreicht man, wie oben dargestellt, mit geeigneten Kühleinrichtungen, bevorzugt durch gleichmässige Verteilung einer definierten Menge von kaltem Plasmagas in die zweite Reaktionskammer (B). Dieses kalte Plasmagas wird zweckmässig aus rezirkulierten Plasmagas gewonnen.

Am Austritt der zweiten Reaktionskammer (B) besteht das Gemisch in der Regel aus Plasmagas, gewünschtem Fulleren im gasförmigen Zustand, aus einem Teil des nicht umgewandelten Rohstoffes und aus nicht verdampfbaren Fullerenen.

Im Warmabscheider (2), der, wie oben dargestellt, als Zyklon ausgestaltet ist, werden durch die Zyklonwirkung die festen Anteile von den gasförmigen Anteilen getrennt. Das gewünschte Fulleren, das selbst flüchtig, ist kann folglich mit einem Wirkungsgrad von bis zu 90% von den übrigen nicht flüchtigen Kohlenstoffverbindungen getrennt werden.

Den Warmabscheider (2) hält man durch bekannte Mittel isotherm auf einer Temperatur von zweckmässig 600 °C bis 1000 °C, um jegliche Kondensation vom gewünschten Fulleren in irgendeinem ihrer Teile zu vermeiden.

Eine Schleuse (9) am Boden des Warmabscheider (2) ermöglicht es, den nicht in gewünschtes Fulleren umgewandelten Kohlenstoff z. B. mit Hilfe eines Gebläses in den geschlossenen Gaskreislauf kontinuierlich zurückzuführen.

Der obengenannte und aber nicht näher dargestellte Filter vermag dieselbe Funktion wie der vorstehend dargestellte Warmabscheider (2) zu erfüllen.

Dem Warmabscheider (2) folgt der Kaltabscheider (3). Dieser wird durch beliebige bekannte Mittel auf eine Temperatur, die zur Kondensation des gewünschten Fullerens ausreicht, zweckmässig auf eine Temperatur von Raumtemperatur bis 200 °C gekühlt.

Am Austritt des Kaltabscheiders (3) sammelt sich in der Regel ein pulverförmiges Material, das aus einem Russ mit einem Anteil an gewünschtem Fulleren von bis zu 40% enthält.

Dank der Schleuse (12) kann der mit dem gewünschten Fulleren angereicherte Russ dem Verfahren entnommen und der weiteren Reinigung zugeführt werden. Die weitere Reinigung kann dabei nach bekannten Verfahreu, z. B. durch Extraktion (Dresselhaus et al., Science of Fullerenes and Carbon Nanotubes, Academic Press, 1996, Chapter 5, 111 ff., insbesondere chapter 5.2 und chapter 5.3), erfolgen.

Das aus dem Kaltabscheider (3) austretende Plasmagas kann z. B. über ein Gebläse über die Leitung (10) in den Plasmareaktor (1) zurückgeführt werden.

Eine Abzweigung (13) von dieser Leitung (10) ermöglicht die Rückführung eines Teils des kalten Stroms in den zweiten Reaktionsraum (B) zwecks Kühlung des Reaktionsgemisches.

Die nachfolgenden Beispiele verdeutlichen den Gegenstand der Erfindung ohne diesen jedoch auf den Umfang der Beispiele zu beschränken.

### Beispiele:

### Beispiel 1

Die Vorrichtung besteht aus einem zylindrischen Reaktor mit einem Innendurchmesser von 300 mm, einer Höhe von 150 cm und einem Doppelkühlmäntel mit Wasserumlauf. Zwischen der Graphitauskleidung und der Innenwand der Druckkammer ist eine Isolierschicht aus Graphitschaum angeordnet. Drei Graphitelektroden mit einem Durchmesser von 20 mm sind mittels einer Gleitvorrichtung durch die Reaktorhaube hindurch mit Hilfe von in elektrisch isolierten Hülsen eingesetzten Stopfbüchsen positioniert. Eine zentrale Leitung mit einem Durchmesser von 3 mm dient der Einführung der Graphitsuspension in das plasmagene Gas. Das Plasmagas ist reines im Kreislauf geführtes Helium.

Die Elektroden werden mit Wechselspannung so versorgt, dass die zugeführte Leistung 100 kw/h beträgt.

Mit einem Dreiphasenregler der in Lichtbogenöfen verwendeten Art wird eine relative Konstanz der elektrischen Eigenschaften auf dem Plasmaniveau sichergestellt. In der Reaktionskammer A wird so eine Plasmatemperatur von ca. 5000 °C gehalten.

Die Reaktionskammer B wird mit kaltem zurückgeführtem Gas versorgt, um dessen Temperatur auf einem Wert von ca. 1600 °C zu halten.

Der Rohstoff ist mikronisierter Graphit vom Typ TIMREX® KS 6 der Timcal AG, CH-Sins. Mit einer Gasmenge von 10 m³/h auf der Höhe des Reaktoreingangs und einem Stoffzusatz von 10 kg/h stellt sich nach einer Stunde Laufzeit ein permanenter Zustand ein. Im Warmabscheider (2), der auf einer Temperatur von 800 °C gehalten wird, wurden über die Schleuse (9) 8 kg/h nicht flüchtige Kohlenstoffverbindungen abgetrennt und zurückgeführt. Es wurde gefunden, dass ca. 6% des eingeführten Kohlenstoffs unter diesen Bedingungen in gasförmiges Fulleren C₆₀ umgewandelt wurde. Mit einem Wirkungsgrad des Warmabscheiders von ca. 90% war das Fulleren C₆₀ zu einem kleinen Teil mit nicht flüchtigen Kohlenstoffverbindungen und Helium vermischt. Dieses Aerosol wurde dem Kaltabscheider (3), der auf einer Temperatur von 150 °C gehalten wurde, überführt.

Das sich am Boden des Kaltabscheiders (3) ansammelnde Produkt wurde bei stabilem Betrieb in einer Menge von 2 kg/h aus der Schleuse (12) ausgetragen und bestand aus 30% Fulleren C₆₀ als Gemisch mit nicht umgesetzten Kohlenstoffen:

Das erhaltene Produkt kann in diesem Zustand verwendet werden, wurde aber gemäss Dresselhaus et al., Science of Fullerenes and Carbon Nanotubes, Academic Press, 1996, Chapter 5, 111 ff., insbesondere chapter 5.2 und chapter 5.3, durch Extraktion mit Toluol weiter gereinigt. Die beispielgemässe Produktion erlaubt die Herstellung von 0,6 kg/h reinem Fulleren C₆₀.

### Beispiel 2

Das Verfahren gemäss Beispiel 1 wurde wiederholt, lediglich Helium wurde durch Argon ersetzt. Unter diesen Bedingungen konnte nach Reinigung reines Fulleren C₆₀ mit einer Stundenleistung von 0,4 kg erhalten werden.

### Beispiel 3

Das Verfahren gemäss Beispiel 1 wurde wiederholt, lediglich der Warmabscheider (2) wurde durch einen Filter aus poröser Keramik ersetzt

Der aus dem Filter austretende und in den Kaltabscheider (3) eintretende Gasstrom bestand nur noch aus mit gasförmigen Fullerenen C₆₀ beladenem Helium. Der Wirkungsgrad des Filters betrug ca. 90%. Nach diesem Verfahren konnte nach Reinigung reines Fulleren C₆₀ mit einer Stundenleistung von 0,6 kg erhalten werden.

### Beispiel 4

Das Verfahren gemäss Beispiel 1 wurde wiederholt, lediglich der mikronisierte Graphit wurde durch einen hochreinen Acetylenruss der Firma SN2A, F- Berre l'Etang, ersetzt. Nach diesem Verfahren konnte nach Reinigung reines Fulleren C₆₀ mit einer Stundenleistung von 0,8 kg erhalten werden.

### Beispiel 5

Das Verfahren gemäss Beispiel 1 wurde wiederholt, lediglich der mikronisierte Graphit wurde durch einen hochreinen entgasten pyrolytischen Graphit des Typs ENSACO Super P der Firma MMM-Carbon, B-Brüssel, ersetzt. Nach diesem Verfahren konnte nach Reinigung reines Fulleren C₆₀ mit einer Stundenleistung von 0,7 kg erhalten werden.

## Patentansprüche

1. Vorrichtung zur kontinuierlichen Herstellung von Russen mit hohem Fullerenanteil aus kohlenstoffhaltigen Verbindungen im Plasma bestehend aus
a) einem Plasmareaktor (1), der aus einer ersten Reaktionskammer (A) besteht, in welcher zwei oder mehrere Elektroden (4) eingelassen sind, die erste Reaktionskammer (A) ferner eine Zufuhreinrichtung (5) für das Plasmagas und die kohlenstoffhaltigen Verbindungen enthält, welche das Plasmagas und die kohlenstoffhaltigen Verbindungen zentral in die Reaktionszone leitet,der Plasmareaktor (1) eine der ersten Reaktionskammer (A) angrenzende zweite Reaktionskammer (B) enthält, die über geeignete Einrichtungen zur Kühlung des aus der ersten Reaktionskammer (A) austretenden Reaktionsgemisches verfügt,
b) einem dem Plasmareaktor (1) anschliessenden Warmabscheider (2) und
c) einem mit dem Warmabscheider (2) verbundenen Kaltabscheider (3).

2. Vorrichtung nach Patentanspruch 1, **dadurch gekennzeichnet, dass** der Plasmareaktor (1) mit einer hitzebeständigen und wärmeisolierenden Auskleidung (6) versehen ist.

3. Vorrichtung nach Patentanspruch 2, **dadurch gekennzeichnet, dass** die Auskleidung (6) aus Graphit besteht.

4. Vorrichtung nach einem der Patentansprüche 1 bis 3, **dadurch gekennzeichnet, dass** zwei oder mehrere Elektroden (4) winklig zur Achse so angeordnet sind, dass sie im oberen Teil der ersten Reaktionskammer (A) einen Schnittpunkt bilden und über in die erste Reaktionskammer eingelassenen Stopfbüchsen (7) individuell in der Richtung ihrer Achsen stufenlos verstellbar sind.

5. Vorrichtung nach Patentanspruch 4, **dadurch gekennzeichnet, dass** drei mit Dreiphasenwechselspannung betriebene Elektroden (4), die aus Graphit bestehen, eingesetzt sind.

6. Vorrichtung nach einem der Patentansprüche 1 bis 5, **dadurch gekennzeichnet, dass** als Einrichtung zur Kühlung eine Zufuhreinrichtung (8) für Plasmagas vorgesehen ist.

7. Vorrichtung nach einem der Patentansprüche 1 bis 6, **dadurch gekennzeichnet, dass** der Warmabscheider (2) in Form eines isotherm beheizbaren Zyklons ausgestaltet ist, welcher im unteren Teil eine Schleuse (9) zur Abtrennung der nicht flüchtigen Bestandteile und eine Leitung (10) zur Rückführung der nicht flüchtigen Bestandteile in den Plasmareaktor (1) enthält, sowie im oberen Teil eine Leitung (11) zur Überführung der flüchtigen Bestandteile in den Kaltabscheider (3) enthält.

8. Vorrichtung nach einem der Patentansprüche 1 bis 7, **dadurch gekennzeichnet, dass** der Warmabscheider (2) in Form eines wärmebeständigen Filters ausgestaltet ist.

9. Vorrichtung nach einem der Patentansprüche 1 bis 8, **dadurch gekennzeichnet, dass** der Kaltabscheider (3) in Form eines kühlbaren Zyklons ausgestaltet ist, welcher im unteren Teil eine Schleuse (12) zur Abtrennung der Fulleren haltigen Russe und im oberen Teil eine Leitung (10) zur Rückführung des Plasmagases in den Plasmareaktor (1) enthält.

10. Vorrichtung nach Patentanspruch 9, **dadurch gekennzeichnet, dass** aus der Leitung (10), welche zur Rückführung des Plasmagases in den Plasmareaktor (1) vorgesehen ist, eine Leitung (13), welche als Zuführung des Plasmagases in die zweite Reaktionskammer (B) vorgesehen ist, abzweigt.

11. Vorrichtung nach einem der Patentansprüche 1 bis 10, **dadurch gekennzeichnet, dass** eine Eintragungsvorrichtung (14) für das kohlenstoffhaltige Material vorliegt, die gestattet, das kohlenstoffhaltige Material über eine Schleuse (15) in die Leitung (10) einzuspeisen.

12. Verfahren zur kontinuierlichen Herstellung von Russen mit hohem Anteil an Fullerenen, **dadurch gekennzeichnet, dass** kohlenstoffhaltigen Verbindungen im Plasma in der Vorrichtung nach einem der Patentansprüche 1 bis 11 umgewandelt werden.

13. Verfahren nach Patentanspruch 12, **dadurch gekennzeichnet, dass** chemisch einheitliche stabile Fullerene hergestellt werden.

14. Verfahren nach Patentanspruch 12 oder 13, **dadurch gekennzeichnet, dass** Fulleren C₆₀, C₇₀ oder C₈₄ oder Gemische dieser Fullerene hergestellt werden.

15. Verfahren nach einem der Patentansprüche 12 bis 14, **dadurch gekennzeichnet, dass** die Plasmatemperatur im ersten Reaktionsraum A im Minimum ca. 4000 °C beträgt.

16. Verfahren nach einem der Patentansprüche 12 bis 15, **dadurch gekennzeichnet, dass** als Plasmagas ein Edelgas oder ein Gemisch von verschiedenen Edelgasen verwendet wird.

17. Verfahren nach einem der Patentansprüche 12 bis 16, **dadurch gekennzeichnet, dass** als Plasmagas Helium verwendet wird.

18. Verfahren nach einem der Patentansprüche 12 bis 17, **dadurch gekennzeichnet, dass** als kohlenstoffhaltiges Material ein hochreiner Kohlenstoff vom Typ Acetylenruss, Grapbitpulver, Russe, gemahlene pyrolytische Graphite oder hochkalcinierter Koks oder Gemische der genannten Kohlenstoffe verwendet werden.

19. Verfahren nach einem der Patentansprüche 12 bis 18, **dadurch gekennzeichnet, dass** die Temperatur in der zweiten Reaktionskammer (B) auf einer Temperatur von 1000 °C bis 2700 °C gehalten wird.

20. Verfahren nach Patentanspruch 19, **dadurch gekennzeichnet, dass** die Temperatur in der zweiten Reaktionskammer (B) durch Zufuhr von kühlem Plasmagas aus der Zufuhreinrichtung (8) reguliert wird.

21. Verfahren nach einem der Patentansprüche 12 bis 20, **dadurch gekennzeichnet, dass** der Warmabscheider (2) isotherm auf einer Temperatur von 600 °C bis 1000 °C gehalten wird.

22. Verfahren nach einem der Patentansprüche 12 bis 21, **dadurch gekennzeichnet, dass** der Kaltabscheider (3) bei einer Temperatur von Raumtemperatur bis 200 °C betrieben wird.

23. Verfahren nach einem der Patentansprüche 12 bis 22, **dadurch gekennzeichnet, dass** ein Russ mit einem hohen Anteil an Fulleren C₆₀ hergestellt wird.

## Claims

1. An apparatus for the continuous production of soots having a high fullerene content from carbon-containing compounds in plasma, consisting of
a) a plasma reactor (1) which consists of a first reaction chamber (A) into which two or more electrodes (4) are inserted, the first reaction chamber (A) furthermore contains a supply means (5) for the plasma gas and the carbon-containing compounds which passes the plasma gas and the carbon-containing compounds centrally into the reaction zone, the plasma reactor (I) contains a second reaction chamber (B) adjoining the first reaction chamber (A), which chamber (B) has suitable means for cooling the reaction mixture emerging from the first reaction chamber (A),
b) a hot separator (2) succeeding the plasma reactor (1) and
c) a cold separator (3) connected to the hot separator (2).

2. An apparatus according to Claim 1, **characterised in that** the plasma reactor (1) is provided with a heat-resistant, heat-insulating cladding (6).

3. An apparatus according to Claim 2, **characterised in that** the cladding (6) is made of graphite.

4. An apparatus according to one of Claims 1 to 3, **characterised in that** two or more electrodes (4) are arranged at an angle to the axis such that they form an intersection in the upper part of the first reaction chamber (A) and are infinitely adjustable individually in the direction of their axes via stuffing boxes (7) inserted into the first reaction chamber.

5. An apparatus according to Claim 4, **characterised in that** three electrodes (4) operated with three-phase alternating current which are made of graphite are used.

6. An apparatus according to one of Claims 1 to 5, **characterised in that** a supply means (8) for plasma gas is provided as the means for cooling.

7. An apparatus according to one of Claims 1 to 6, **characterised in that** the hot separator (2) is in the form of an isothermally heatable cyclone which contains in its lower part a lock means (9) for separating off the non-volatile constituents and a line (10) for returning the non-volatile constituents into the plasma reactor (1), and also in the upper part a line (11) for transferring the volatile constituents into the cold separator (3).

8. An apparatus according to one of Claims 1 to 7, **characterised in that** the hot separator (2) is in the form of a heat-resistant filter.

9. An apparatus according to one of Claims 1 to 8, **characterised in that** the cold separator (9) is in the form of a coolable cyclone which contains in the lower part a lock means (12) for separating off the fullerene-containing soots and in the upper part a line (10) for returning the plasma gas into the plasma reactor (1).

10. An apparatus according to Claim 9, **characterised in that** a line (13) which is provided as a means for supplying the plasma gas to the second reaction chamber (B) branches off from the line (10) which is provided for returning the plasma gas into the plasma reactor (1).

11. An apparatus according to one of Claims 1 to 10, **characterised in that** an introduction device (14) for the carbon-containing material is present which makes it possible to feed the carbon-containing material via a lock means (15) into the line (10).

12. A method for the continuous production of soots having a high content of fullerenes, **characterised in that** carbon-containing compounds in plasma are converted in the apparatus according to one of Claims 1 to 11.

13. A method according to Claim 12, **characterised in that** chemically uniform stable fullerenes are produced.

14. A method according to Claim 12 or 13, **characterised in that** fullerene C₆₀, C₇₀ or C₈₄ or mixtures of these fullerenes are produced.

15. A method according to one of Claims 12 to 14, **characterised in that** the plasma temperature in the first reaction chamber A is a minimum of approximately 4000°C.

16. A method according to one of Claims 12 to 15, **characterised in that** a noble gas or a mixture of different inert gases is used as plasma gas.

17. A method according to one of Claims 12 to 16, **characterised in that** helium is used as plasma gas.

18. A method according to one of Claims 12 to 17, **characterised in that** a highly pure carbon of the type acetylene soot, graphite powder, soots, ground pyrolytic graphites or highly calcined coke or mixtures of the aforementioned carbons are used as carbon-containing material.

19. A method according to one of Claims 12 to 18, **characterised in that** the temperature in the second reaction chamber (B) is kept at a temperature of from 1000°C to 2700°C.

20. A method according to Claim 19, **characterised in that** the temperature in the second reaction chamber (B) is regulated by supplying cool plasma gas from the supply means (8).

21. A method according to one of Claims 12 to 20, **characterised in that** the hot separator (2) is kept isothermally at a temperature of 600°C to 1000°C.

22. A method according to one of Claims 12 to 21, **characterised in that** the cold separator (3) is operated at a temperature from room temperature to 200°C.

23. A method according to one of Claims 12 to 22, **characterised in that** a soot with a high content of fullerene C₆₀ is produced.

## Revendications

1. Dispositif pour la fabrication en continu de suies à teneur élevée en fullerènes à partir de composés carbonés dans du plasma, constitué de
a) un réacteur à plasma (1) qui est constitué d'une première chambre de réaction (A) dans laquelle sont plongées deux ou plusieurs électrodes (4), la première chambre de réaction (A) contenant en outre un dispositif d'amenée (5) pour le gaz plasmagène et pour les composés carbonés, lequel introduit le gaz plasmagène et les composés carbonés au centre de la zone de réaction, le réacteur à plasma (1) contenant une seconde chambre de réaction (B) qui est adjacente à la première chambre de réaction (A) et qui dispose de dispositifs appropriés pour le refroidissement du mélange réactionnel sortant de la première chambre de réaction (A),
b) un séparateur à chaud (2) raccordé au réacteur à plasma (1) et
c) un séparateur à froid (3) relié au séparateur à chaud (2).

2. Dispositif selon la revendication 1, **caractérisé en ce que** le réacteur à plasma (1) est muni d'un chemisage thermorésistant et calorifuge (6).

3. Dispositif selon la revendication 2, **caractérisé en ce que** le chemisage (6) est constitué de graphite.

4. Dispositif selon une des revendications 1 à 3, **caractérisé en ce que** deux ou plusieurs électrodes (4) sont disposées selon un angle par rapport à l'axe, de façon qu'elles forment un point d'intersection dans la partie supérieure de la première chambre de réaction (A) et que l'orientation de leur axe puisse être réglée progressivement de manière individuelle par l'intermédiaire de boîtes à garniture (7) insérées dans la première chambre de réaction.

5. Dispositif selon la revendication 4, **caractérisé en ce que** trois électrodes (4) actionnées par une tension alternative triphasée et constituées de graphite sont mises en oeuvre.

6. Dispositif selon une des revendications 1 à 5, **caractérisé en ce qu'**un dispositif d'amenée (8) pour du gaz plasmagène est prévu comme dispositif de refroidissement.

7. Dispositif selon une des revendications 1 à 6, **caractérisé en ce que** le séparateur à chaud (2) est conçu sous la forme d'un cyclone à chauffage isotherme qui comporte, en partie basse, un sas (9) pour séparer les composants non volatils et une conduite (10) pour ramener les composants non volatils au réacteur à plasma (1) et, en partie haute, une conduite (11) pour transférer les composants volatils au séparateur à froid (3).

8. Dispositif selon une des revendications 1 à 7, **caractérisé en ce que** le séparateur à chaud (2) est conçu sous la forme d'un filtre thermorésistant.

9. Dispositif selon une des revendications 1 à 8, **caractérisé en ce que** le séparateur à froid (3) est conçu sous la forme d'un cyclone refroidi qui comporte, en partie basse, un sas (12) pour séparer les suies contenant des fullerènes et, en partie haute, une conduite (10) pour ramener le gaz plasmagène au réacteur à plasma (1).

10. Dispositif selon la revendication 9, **caractérisé en ce qu'**à partir de la conduite (10) qui est prévue pour ramener le gaz plasmagène au réacteur à plasma (1) bifurque une conduite (13) qui est prévue pour amener le gaz plasmagène dans la seconde chambre de réaction (B).

11. Dispositif selon une des revendications 1 à 10, **caractérisé en ce qu'**il est prévu un dispositif d'introduction (14) pour la matière carbonée, lequel permet d'envoyer la matière carbonée dans la conduite (10) par l'intermédiaire d'un sas (15).

12. Procédé pour la fabrication en continu de suies à teneur élevée en fullerènes, **caractérisé en ce que** des composés carbonés sont transformés dans le plasma dans le dispositif selon une des revendications 1 à 11.

13. Procédé selon la revendication 12, **caractérisé en ce que** les fullerènes fabriqués sont stables et de constitution chimique définie.

14. Procédé selon la revendication 12 ou 13, **caractérisé en ce que** des fullerènes C₆₀, C₇₀ ou C₈₄ ou des mélanges de ces fullerènes sont fabriqués.

15. Procédé selon une des revendications 12 à 14, **caractérisé en ce que** la température du plasma dans la première chambre de réaction A est au minimum d'environ 4 000 °C.

16. Procédé selon une des revendications 12 à 15, **caractérisé en ce que** le gaz plasmagène employé est un gaz rare ou un mélange de différents gaz rares.

17. Procédé selon une des revendications 12 à 16, **caractérisé en ce que** le gaz plasmagène employé est de l'hélium.

18. Procédé selon une des revendications 12 à 17, **caractérisé en ce que** la matière carbonée employée est un carbone de grande pureté du type noir d'acétylène, poudre de graphite, suies, graphites pyrolytiques broyés ou coke fortement calciné ou des mélanges desdits carbones.

19. Procédé selon une des revendications 12 à 18, **caractérisé en ce que** la température dans la seconde chambre de réaction (B) est maintenue à une température de 1 000 °C à 2 700 °C.

20. Procédé selon la revendication 19, **caractérisé en ce que** la température dans la seconde chambre de réaction (B) est réglée par apport de gaz plasmagène frais à partir du dispositif d'amenée (8).

21. Procédé selon une des revendications 12 à 20, **caractérisé en ce que** le séparateur à chaud (2) est maintenu de manière isotherme à une température de 600 °C à 1 000 °C.

22. Procédé selon une des revendications 12 à 21, **caractérisé en ce que** le séparateur à froid (3) est exploité à une température comprise entre la température ambiante et 200 °C.

23. Procédé selon une des revendications 12 à 22, **caractérisé en ce que** la suie fabriquée possède une teneur élevée en fullerènes C₆₀.
